# EUROPEAN PATENT APPLICATION

(11) **EP 4 163 662 A1**
(43) Date of publication of application: **12.04.2023**
(21) Application number: 21201983.0
(22) Date of filing: 11.10.2021
(51) Int. Cl.: G01S 7/02, G01S 7/03, G01S 13/931

(54) **DEVICE FOR IMPROVING THE TRANSMISSION BEHAVIOR OF RADAR WAVES, EXTERNAL CLADDING COMPONENT OF A VEHICLE AND VEHICLE COMPRISING SUCH AN EXTERNAL CLADDING COMPONENT**

(71) Applicant: Motherson Innovations Company Limited, London EC2N 2AX (GB)
(72) Inventor: SEPP, Benjamin, 77723 Gengenbach (DE)
(74) Representative: Westphal, Mussgnug & Partner Patentanwälte mbB

(57) **Abstract**

The present disclosure is drawn to a device (10) for improving the transmission behavior of radar waves (λ), comprising a mounting section (14) to which a radar sensor (12) can be fastened, and a wall section (18) having a first surface (20) and a second surface (22), wherein radar waves (λ) that are emitted by the radar sensor (12) when fastened to the mounting section (14) impinge on the first surface (20) by an angle of incidence (α, β, γ, δ), enter the wall section (18) and leave the wall section (18) via the second surface (22), the radar waves (λ) travel a traveling distance (d) between the first surface (20) and the second surface (22), the first surface (20) and the second surface (22) being shaped such that the traveling distance (d) of the radar waves (λ) stays constant for every angle of incidence (α, β, γ, δ).

## Description

The present disclosure relates to a device for improving the transmission behavior of radar waves and relates to an external cladding component of a vehicle. Moreover, the present disclosure relates to a vehicle comprising such an external cladding component.

To enhance the operational safety, modern vehicles are equipped with a number of assistance systems assisting the vehicle driver. Many assistance systems are based on the monitoring of the surroundings of the vehicle and interact with respective sensors. Based on the situation identified in the surroundings of the vehicle the assistance systems may take action. Such an action may be to generate a signal, e.g., in optical or acoustic form, to draw the driver's attention to a certain situation. Such a situation could be that objects are identified in the surroundings that may collide with the vehicle if no counteractions are taken. Another action may be that the assistance systems initiate a braking manoeuver and/or to intervene in the steering to conduct an evasive manoeuver. The monitoring of the surroundings of a vehicle is a key issue in the autonomous driving.

To monitor the surroundings the sensors may comprise a source for electromagnetic waves that are emitted to the surroundings. In case an object is present in the surroundings the electromagnetic waves are reflected and detected by a respective receiver. The situation in the surroundings of the vehicle can thus be characterized. The degree a certain object reflects the electromagnetic waves amongst others depends on the material the object is made of. Other factors are the size of the object and the effective reflection surface. Consequently vehicles are equipped with sensors using electromagnetic waves of different wavelength and frequency ranges. One important kind of electromagnetic waves are radar waves. The respective radar sensors comprise a radar source for generating and emitting radar waves and a receiver for receiving the reflected radar waves.

Due to design reasons the sensors are located behind the external cladding component to be invisible or almost invisible from the exterior. Therefore, the electromagnetic waves emitted by the respective sources have to penetrate the external cladding component of the vehicle to reach the exterior of the vehicle. In many cases the external cladding components are made of plastics, in particular of thermoplastics that attenuate the electromagnetic waves to a certain degree. The more the waves are attenuated the worse the performance of the radar sensor in particular with regard to the detection range and the resolution accuracy. The degree by which the electromagnetic waves are attenuated depends on several factors, some of which are the wall thickness of the external cladding component and the corresponding traveling distance of the electromagnetic waves through the external cladding component. Other factors are the material the external cladding component is made of and the properties of the lacquer or coating applied on the external cladding component and in particular to the finished surface.

Ways to reduce the attenuation of electromagnetic waves are disclosed in DE 100 53 517 A1, DE 198 19 709 A1, DE 10 2018 211 786 A1, DE 102 59 246 A1, WO 2006/042725 A1 and WO 2007/045452 A2.

As mentioned, one important kind of electromagnetic waves are radar waves which are generated by a radar sensor. The radar sensor emits the radar waves within an area that has a shape approximately equaling a cone. One may distinguish radar sensors configured as long-range radar sensors and radar sensors configured as short-range radar sensors. Long range radar sensors are used to detect objects comparatively far away from the vehicle such as other vehicles driving in front of the vehicle comprising the radar sensor in question. Such other vehicles may be up to 200 m ahead on motorways and country roads on which the vehicles travel at high velocities.

Short-range radar sensors are used to monitor the near surroundings of the vehicle to detect objects like walls or parking vehicles. Beyond that short-range radar sensors can be used for a so-called blind spot detection to identify other vehicles that are not or hardly visible for the driver. Such situations may arise when the driver wants to change the lane at a motorway or turn into a road that is poorly visible.

While the opening angle of long-range radar sensors is rather small, the opening angle of the short-range radar sensors is considerably bigger. As mentioned the radar waves have to penetrate the external cladding components first to enter the surroundings around the vehicle. The bigger the opening angle of the radar sensor is the bigger the variation of the angle of incidence by which the radar waves impinge on the external cladding component. The traveling distance through the external cladding component of a given radar wave having a comparatively large angle of incidence may thus significantly deviate from the traveling distance of a radar wave having a smaller angle of incidence. Due to the different traveling distance the attenuation of the radar waves vary accordingly. Due to the large opening angle this variation is particularly eminent in short-range radar sensors. Moreover, due to the large opening angle the area covered by the radar waves is bigger. The bigger the area covered the bigger is the variation of the cladding component, e.g. with respect to wall thickness and curvature which further adds to the variation of the attenuation.

It is one task of one embodiment of the present disclosure to present a device for improving the transmission behavior of radar waves by which the above described drawbacks can be eliminated or at least reduced and the performance of a radar sensor be improve.

The task is solved by the features specified in claims 1, 4 and 8. Advantageous embodiments are the subject of the dependent claims.

According to an embodiment a device for improving the transmission behavior of radar waves comprises
- a mounting section to which a radar sensor can be fastened, and
- a wall section having a first surface and a second surface, wherein
- radar waves that are emitted by the radar sensor when fastened to the mounting section
   ∘ impinge on the first surface by an angle of incidence,
   ∘ enter the wall section and
   ∘ leave the wall section via the second surface,
- the radar waves travel a traveling distance between the first surface and the second surface,
- the first surface and the second surface being shaped such that the traveling distance of the radar waves stays constant for every angle of incidence.

The shortest distance between the first surface and the second surface of a given wall section running parallel or almost parallel to each other is usually defined by a line running perpendicular to the first surface and the second surface. The shortest distance equals the wall thickness of the wall section. A radar wave impinging perpendicularly on the first surface would thus penetrate the wall section by the shortest possible traveling distance. In this case the angle of incidence is 90°. However, as initially noted, the radar source emits the radar waves within a cone-shaped area. While radar waves in the center of the cone-shaped area may impinge the first surface by an angle of incidence of 90° or approximately 90°, the further outside the center the radar waves are running the smaller the angle of incidence by which these radar waves impinge the first surface. As a consequence the traveling distance gets longer leading to a different degree of attenuation compared to the radar waves running in or near the center of the cone-shaped area. Assuming that the attenuation of the radar waves in the center is minimized the radar waves running further outside the center are attenuated to a higher degree.

The wall section of the device according to the present disclosure is formed such that the traveling distance of the radar waves penetrating the wall section is the same irrespective of the angle of incidence. The wall thickness has a maximum in the center of the cone-shaped area where the radar waves impinge the first surface by an angle of incidence of 90° or approximately 90° and decreases with increasing distance from the center. The decrease of the wall thickness is chosen such that the traveling distance of the radar waves penetrating the wall thickness keeps constant. The attenuation of the radar waves is thus the same within the cone-shaped area leading to an improved performance of the radar sensor mounted to the mounting section.

From the previous explanations it is evident that the cone-shaped area is defined by the radar sensor. To reach the same degree of attenuation of the radar waves within the cone-shaped area it is important that the position of the radar sensor relative to the wall section is clearly defined. Therefore the device also comprises the mounting section to which the radar sensor can be fastened. The mounting section defines the desired position of the radar sensor relative to the wall section.

A further embodiment may be characterized in that the mounting section and the wall section are made in one piece. The device according to this embodiment may be injection molded such that a large number of devices may be manufactured in a fast and cost-efficient way. It is not necessary to connect the mounting section and the wall section to each other which on one hand saves a manufacturing step and on the other hand ensures that the mounting section and the wall section are precisely positioned to each other.

According to another embodiment the mounting section can comprise an absorption layer or can comprise absorptive material such that radar waves that are emitted by the radar sensor when fastened to the mounting section and impinge on the mounting section are absorbed. It may not be avoidable that a part of the radar waves impinging on the first surface are reflected such that they hit the mounting section. Subsequently, the surface of the mounting section may reflect the radar waves that may reach the radar detector without being reflected by an object in the surroundings of the vehicle. Thus, they cause an interfering signal that may lead to misinterpretations (so-called ghost objects). In this embodiment radar waves impinging on the mounting section are absorbed, thereby avoiding interfering signals. The quality of the detection of objects in the surroundings of the vehicle is increased.

A further embodiment is directed to an external cladding component of a vehicle, comprising
- a base body, and
- a device according to one of the preceding embodiments
   o fastened to the base body or
   o being an integral part of the base body.

The technical effects and advantages as discussed with regard to the present device equally apply to the external cladding component. Briefly, the attenuation of the radar waves impinging on the base body and penetrating the external cladding component is the same within the cone-shaped area leading to in improved performance of the radar sensor mounted to the mounting section.

The device can be fastened to the base body of the cladding component, e.g. by welding or sticking. However, it is also possible to integrate the device into the cladding component such that a fastening step can be omitted.

A further embodiment may be characterized in that
- the mounting section and the wall section are made of a first plastic and
- the base body is made of a second plastic.

As mentioned the device can be made by injection molding. The same applies to the base body of the cladding component. However, it is not necessary that the base body is made of the same plastic as the mounting section and the wall section. The base body may have to fulfil requirements that are different from the requirements the mounting section and the wall section need to fulfil. The first plastic and the second plastic may be chosen such that each requirement can be met.

In another embodiment the second surface can be part of the outer surface of the cladding component. In this embodiment the device may be embodied as a bezel, a grille or the like such that the second surface of the device is visible from outside. In particular when the cladding component is embodied as a bumper the latter usually comprises a plurality of bezels or grilles. In this embodiment the device also fulfils the task of a bezel, a grille or the like, thereby keeping the number of components low. Alternatively the outer surface itself is formed by the bumper.

In accordance with a further embodiment a radar sensor may be fastened to the mounting section. In this embodiment the cladding component is fully operative with respect to the detection of objects in the surroundings of the vehicle.

A further embodiment is drawn to a vehicle, comprising an external cladding component according to one of the previous embodiments or a device according to one of the preceding embodiments. The technical effects and advantages as discussed with regard to the present external cladding component equally apply to the vehicle. Briefly the attenuation of the radar waves impinging on the base body and penetrating the external cladding component is the same within the cone-shaped area leading to an improved performance of the radar sensor mounted to the mounting section.

The present disclosure is described in detail with reference to the drawings attached wherein
- Figure 1: shows a principle sectional view of a device for improving the transmission behavior of radar waves according to a first embodiment of the present disclosure,
- Figure 2: shows a principle sectional view of the device for improving the transmission behavior of radar waves according to a second embodiment of the present disclosure,
- Figure 3: shows a principle sectional view of the device for improving the transmission behavior of radar waves according to a third embodiment of the present disclosure,
- Figure 4: shows an external cladding component which comprises a device according to one of the embodiments shown in Figures 1 to 3, and
- Figure 5: shows a principle top view of a vehicle comprising a plurality of external cladding components of the present disclosure.

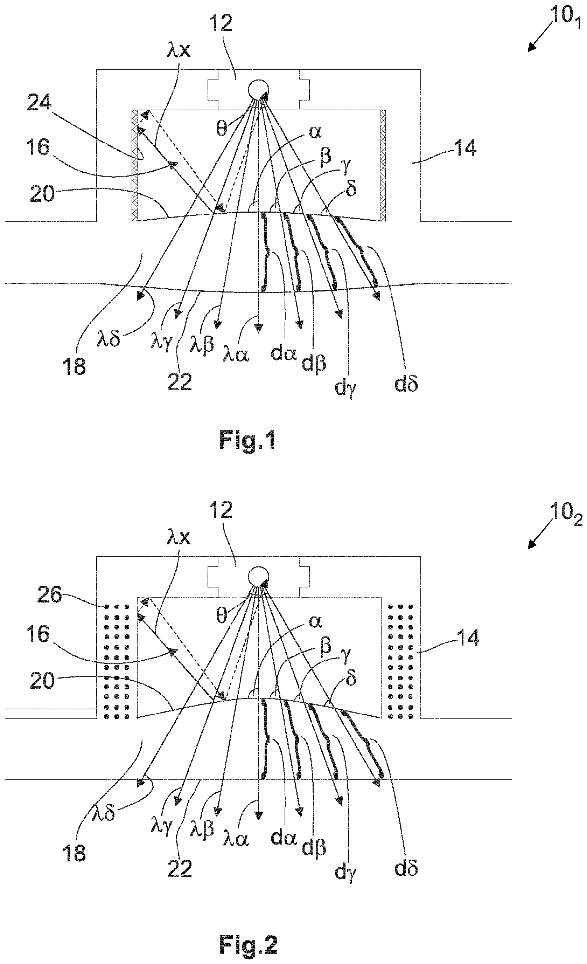

Figure 1 shows a principle sectional view of a device 10₁ for mounting a radar sensor 12 according to a first embodiment of the present disclosure. The device 10₁ comprises a mounting section 14 to which a radar sensor 12 is mounted. The radar sensor 12 creates radar waves λ that are emitted within a cone-shaped area 16 with a given opening angle θ.

The device 10₁ further comprises a wall section 18 which is in the first embodiment integrally formed with the mounting section 14. The wall section 18 and the mounting section 14 are thus made in one piece. The wall section 18 has a first surface 20 and a second surface 22, the first surface 20 facing to the radar sensor 12 and the second surface 22 facing to the exterior. The opening angle θ is chosen such that all of the radar waves λ emitted by the radar sensor 12 impinge on the first surface 20, enter the wall section 18 and leave the wall section 18 via the second surface 22. The distance a given radar wave has to travel between the first surface 20 and the second surface 22 is referred to as a traveling distance d.

In Figure 1 the beam path for some randomly chosen radar waves λα, λβ, λγ, λδ and the respective traveling distance dα to dδ through the wall section 18 is indicated. The radar wave λα impinging on the first surface 20 by an angle of incidence α = 90° travels through the wall section 18 by the traveling distance dα, the radar wave λβ impinging on the first surface 20 by an angle of incidence β < α travels through the wall section 18 by the traveling distance dβ, the radar wave λγ impinging on the first surface 20 by an angle of incidence γ < β travels through the wall section 18 by the traveling distance dy and the radar wave λδ impinging on the first surface 20 by an angle of incidence δ < γ travels through the wall section 18 by the traveling distance dδ.

The first surface 20 and the second surface 22 are shaped such that the traveling distance dα to dδ of the radar waves λ travelling through the wall section 18 stays constant irrespective of the angle of incidence α to δ. As a result dα = dβ = dγ = dδ. In the embodiment shown in Figure 1 the first surface 20 and the second surface 22 are convexly shaped, here approximately ball-shaped.

As the attenuation of the radar waves λ penetrating the wall section 18 primarily depends on the traveling distance d through the wall section 18 the radar waves λ are attenuated to the same or almost the same degree. The attenuation influences the performance of the radar sensor 12. Due to the improved transmission behavior a better performance of the radar sensor can be reached.

It can be seen from Figure 1 that at least a part of the radar waves λ that impinge on the first surface 20 are reflected. The reflected radar waves are denominated with λx The reflected radar waves λx impinge on the mounting section 14, from the mounting section back to the first surface 20 and from the first surface 20 to the radar sensor 12. The reflected radar waves λx may cause interfering signals in the radar sensor 12. To avoid such interfering signals the mounting section 14 comprises an absorption layer 24 on which the radar waves λx impinge. Radar waves λx impinging on the absorption layer 24 are absorbed. The radar waves λx that are illustrated by the dashed lines are cancelled and therefore cannot create interfering signals.

It is worth mentioning that in Figure 1 the radar waves λx are only shown to explain the creation of interfering signals. In operation of the device 101 a plurality of reflected radar waves λx is expected.

Figure 2 shows a principle sectional view of a device 10₂ for mounting a radar sensor 12 according to a second embodiment of the present disclosure. As the basic construction of the device 10₂ according to the second embodiment is to a large extent similar to the basic construction of the device 10₁ of the first embodiment only the important differences are described. In the second embodiment of the device 10₂ the second surface 22 is planar and only the first surface 20 is convexly shaped. To keep the traveling distance d constant for all angles of incidence α to δ the first surface 20 is more strongly curved than the first surface 20 of the device 10₁ according to the first embodiment.

In the second embodiment the mounting section 14 comprises an absorptive material 26 such that radar waves λx impinging on the mounting section 14 are not reflected to avoid interfering signals. In the second embodiment no absorption layer 24 is employed.

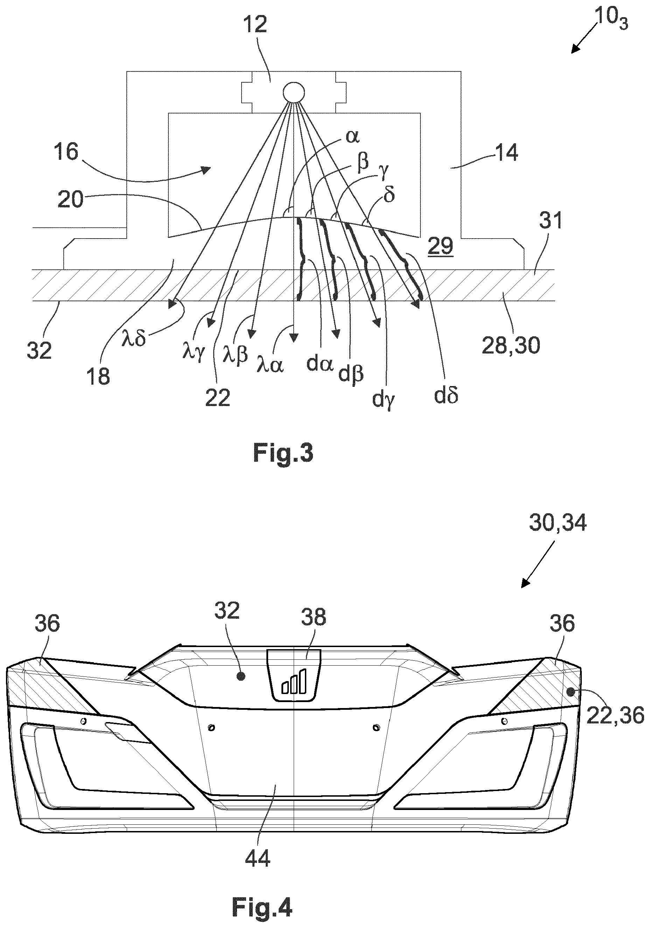

Figure 3 shows a third embodiment of the device 10₃ for mounting a radar sensor 12 which is to a large extent similar to the second embodiment of the device 10₂. However, the device 10₃ is fastened to a base body 28 of an external cladding component 30, e.g. by welding or sticking or is directly molded on the together with the base body 28. The mounting section 14 and the wall section 18 may be made of a first plastic 29 that is different from a second plastic 31 by which the external cladding component 30 is made of. The influence of the first plastic 29 and the second plastic 31 on the attenuation of the radar waves λ may be different. The curvature of the first surface 20 and/or the second surface 22 may be chosen such that the different influence on the attenuation is compensated.

Not shown is an embodiment in which the mounting section 14 and the wall section 18 are made of different plastic.

In the first embodiment and the second embodiment the device 10₁ and 10₂ may be an integral part of the base body 28 of the cladding component 30 such that the second surface 22 may form a part of the outer surface 32 of the cladding component 30.

Figure 4 shows an external cladding component 30 of a vehicle 33, in this case a front bumper 34. The front bumper 34 comprises two bezels 36 that are indicated by hatched areas. Each bezel 36 is formed by one device 10₁, 10₂ according to the first or second embodiment (not shown in Figure 4). In this case the second surface 22 of the device 10₁, 10₂ forms a part of the outer surface 32 of the cladding component 30.

A brand logo 38 of a given vehicle manufacturer is located in the upper center of the front bumper 34. The brand logo 38 may also be formed by a device 10₁, 10₂ according to the first or second embodiment. The same may apply to a grille 44 that is integrated into the front bumper 34.

A number of devices 10₃ according to the third embodiment may be fastened to the front bumper 34 at any desired location.

It should be noted that it is not necessary that the front bumper 34 comprises a bezel 36. The devices 10₃ may also be mounted on a coated bumper fascia.

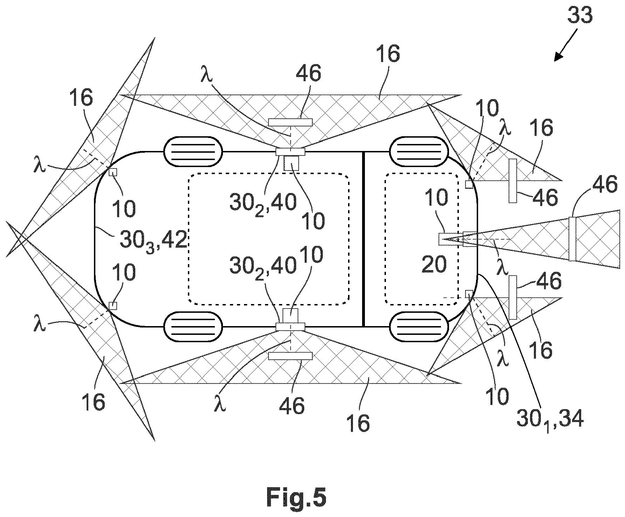

Figure 5 shows a top view of a vehicle 33 being equipped with a plurality of external cladding components 30 to which one or more of the devices 10 according to one of the embodiments may be fastened. A first external cladding component 30₁ is embodied as a front bumper 34 such as shown in Figure 4. Moreover, two second external cladding components 30₂ are embodied as B-pillar claddings 40. A third external cladding component 30₃ is embodied as a rear bumper 42. The radar sensors of the devices 10 may observe an object 46 in the surroundings of the vehicle 33 in case it is located within the cone-shaped area 16.

### Reference list

- 10: device
- 10₁ to 10₃: device
- 12: radar sensor
- 14: mounting section
- 16: cone-shaped section
- 18: wall section
- 20: first surface
- 22: second surface
- 24: absorption layer
- 26: absorptive material
- 28: base body
- 29: first plastic
- 30: external cladding component
- 30₁ to 30₃: external cladding component
- 31: second plastic
- 32: outer surface
- 33: vehicle
- 34: front bumper
- 36: bezel
- 38: brand logo
- 40: B-pillar
- 42: rear bumper
- 44: grille
- 46: object
- d: traveling distance
- dα to dδ: traveling distance
- α to δ: angle of incidence
- θ: opening angle
- λ: radar wave
- λα to λδ, λx: radar wave

## Claims

1. Device (10) for improving the transmission behavior of radar waves (λ), comprising
- a mounting section (14) to which a radar sensor (12) can be fastened, and
- a wall section (18) having a first surface (20) and a second surface (22), wherein
- radar waves (λ) that are emitted by the radar sensor (12) when fastened to the mounting section (14)
∘ impinge on the first surface (20) by an angle of incidence (α, β, γ, δ),
∘ enter the wall section (18) and
∘ leave the wall section (18) via the second surface (22),
- the radar waves (λ) travel a traveling distance (d) between the first surface (20) and the second surface (22),
- the first surface (20) and the second surface (22) being shaped such that the traveling distance (d) of the radar waves (λ) stays constant for every angle of incidence (α, β, γ, δ).

2. Device (10) according to claim 1,
**characterized in that** the mounting section (14) and the wall section (18) are made in one piece.

3. Device (10) according to one of the claims 1 or 2,
**characterized in that** the mounting section (14) comprises an absorption layer (24) or comprises absorptive material such that radar waves (λ) that are emitted by the radar sensor (12) when fastened to the mounting section (14) and impinge on the mounting section (14) are absorbed.

4. External cladding component (30) of a vehicle (33), comprising
- a base body (28), and
- a device (10) according to one of the preceding claims
∘ fastened to the base body (28) or
∘ being an integral part of the base body (28).

5. External cladding component (30) according to claim 4, **characterized in that**
- the mounting section (14) and the wall section (18) are made of a first plastic (29) and
- the base body (28) is made of a second plastic (31).

6. External cladding component (30) according to one of the claims 4 or 5,
**characterized in that** the second surface (22) is part of the outer surface (32) of the cladding component (30).

7. External cladding component (30) according to one of the claims 4 to 6,
**characterized in that** a radar sensor (12) is fastened to the mounting section (14).

8. Vehicle (33), comprising an external cladding component (30) according to one of the claims 4 to 7 or a device (10) according to one of the claims 1 to 3.
